# EUROPÄISCHE PATENTSCHRIFT

(11) **EP 0 877 683 B1**
(45) Veröffentlichungstag und Bekanntmachung des Hinweises auf die Patenterteilung: **22.08.2001**
(21) Anmeldenummer: 97952889.0
(22) Anmeldetag: 05.12.1997
(51) Int. Cl.: B60R 21/26

(54) **GASGENERATOR**
GAS GENERATOR
GENERATEUR DE GAZ

(30) Priorität: 06.12.1996 DE 19650630
(43) Veröffentlichungstag der Anmeldung: 18.11.1998
(73) Patentinhaber: TRW Airbag Systems GmbH & Co. KG, 84544 Aschau am Inn (DE)
(72) Erfinder: SCHWUCHOW, Karsten, D-83512 Wasserburg (DE); WOITGE, Wolf-Dieter, D-84478 Waldkraiburg (DE); TASCHE, Michael, D-18055 Rostock (DE); SEIDL, Johann, D-84513 Töging (DE)
(74) Vertreter: Kitzhofer, Thomas, Dipl.-Ing.
(86) Internationale Anmeldenummer: EP9706817
(87) Internationale Veröffentlichungsnummer: WO9824662

(56) Entgegenhaltungen:
- DE-A- 19 644 258
- US-A- 3 721 456
- US-A- 5 462 307

## Beschreibung

Die Erfindung betrifft einen Gasgenerator mit einem Gehäuse, einer Ausströmöffnung im Gehäuse, über die Gas austreten kann, und einer Berstmembran, die die Ausströmöffnung im nicht aktivierten Zustand des Gasgenerators verschließt und die bei Aktivierung unmittelbar durch den vom Gas erzeugten hohen Innendruck zerstört wird, wobei die Berstmembran einen Außenrand hat, an dem sie dauerhaft an einer Wandung befestigt ist, die wenigstens einen axialen Abschnitt der Ausströmöffnung definiert.

Die Erfindung betrifft Gasgeneratoren, bei denen die Berstmembran nur durch den sich erhöhenden Innendruck und nicht etwa durch Projektile oder in der Nähe der Membrane angeordnete, zusätzliche Zünder zerstört wird.

Ein derartiger Gasgenerator ist aus der US 3,721,456 bekannt. Dieser gattungsgemäße Rohrgasgenerator hat ein mehrteilig ausgeführtes Gehäuse. Das Gehäuse besteht aus einem rohrförmigen Abschnitt und einer aufwendig gefertigten, darin eingeschraubten Stirnwand, die eine sich verjüngende Ausströmöffnung hat. Innenseitig ist an die Stirnwand vor der Ausströmöffnung eine Membran befestigt. Die Innenseite der Stirnwand geht in einem 90°-Winkel in die Ausströmöffnung über. Die Membran ist an der Innenseite der Stirnwand befestigt. Beim Überschreiten eines bestimmten Innendrucks im Gehäuse reißt die Berstmembran in Einzelteile. Einige dadurch gebildete Membransegmente werden mit dem Gasstrom mitgerissen und können in den sich anschließenden Gassack gelangen, wo sie aufgrund ihrer hohen Temperatur die Gassackwandung zerstören können. Um ein Mitreißen derartiger heißer Membransegmente in den Gassack zu verhindern, sind im Stand der Technik stets Filter nach der Ausströmöffnung vorgesehen, die die Membransegmente zurückhalten.

Aus der US-A-5462307 ist ein Hybrid-Gasgenerator mit einer Ausströmöffnung bekannt, deren Berstmembran durch ein Projektil zerstört wird. Das Projektil wird durch eine in einer Kammer angeordnete pyrotechnische Ladung beschleunigt, wobei die Kammer durch eine innere Berstmembran abgeschlossen ist. An die innere Berstmembran schließt sich ein Gasführungsrohr an, welches das bei Zündung der pyrotechnischen Ladung erzeugte heiße Gas auf das Projektil lenken soll. Das heiße Gas wird im Gasgenerator mehrfach umgelenkt, so daß die Gefahr des Entweichens von abgerissenen Teilen der inneren Berstmembran aus dem Gasgenerator gering ist.

Die Erfindung schafft einen einfacher aufgebauten Gasgenerator, bei dem die Gefahr der Bildung von mit der Gasströmung mitgerissenen Membransegmenten ausgeschlossen werden kann.

Dies wird bei einem Gasgenerator der eingangs genannten Art dadurch erreicht, daß die Wandung stromabwärts unmittelbar nach dem Befestigungsbereich der Berstmembran abgerundet oder nach innen und in Ausströmrichtung schräg verläuft, die Ausströmöffnung durch einen Ausströmkanal definiert ist und die Wandung Teil einer sich an die Berstmembran in Strömungsrichtung anschließenden Düse ist, die einen konkaven Abschnitt hat. Überraschenderweise hat sich herausgestellt, daß durch. diese Maßnahme keine Membransegmente erzeugt werden, die mit der Gasströmung mitgerissen werden. Die Membransegmente sind vielmehr auch nach dem Zerstören der Membran im Befestigungsbereich an der Wandung gehalten. Beim Stand der Technik ist es offensichtlich hauptsächlich die Kerbwirkung, also ein zu scharfkantiger Übergang zwischen der Innenseite der Stirnwand und der Innenseite der Ausströmöffnung, der zum Abscheren oder zum zu starken Biegen der Membran bei ihrem Zerstören führt. Durch diese erfindungsgemäße, einfache Maßnahme werden sogar die bislang stets notwendigen Filter überflüssig.

Es hat sich herausgestellt, daß sich die bei Zerstören der Membran entstehenden Membransegmente sehr gut an einen konkaven Abschnitt anlegen können, ohne daß von ihnen Teile abgerissen werden.

Der konkave Abschnitt ist im übrigen vorzugsweise domförmig.

Gemäß einer weiteren Ausgestaltung ist die Innenseite der Wandung so geformt, daß sich die Berstmembran kurz vor Erreichen des zu ihrem Zerstören führenden Innendrucks im Gehäuse nicht an die Wandung anlegt. Durch dieses Merkmal wird verhindert, daß die Membran undefiniert aufreißt. Die Membran wird bei Vorhandensein eines Gasdrucks im Gehäuse kalottenförmig nach außen gewölbt. Die größte Spannung in der Membran wird dabei an dem sich am weitesten nach außen geformten Bereich (Scheitelbereich) entstehen. Von diesem Bereich aus beginnt die Zerstörung der Berstmembran ab Erreichen des Berstdrucks. Damit ergibt sich ein sternförmiger Rißverlauf mit relativ kurzen, gleichmäßig langen Membransegmenten. Würde sich die Membran an die Innenseite der Wandung anlegen können, so würde der Riß der Membran von einem anderen Punkt ausgehen, und es würden unterschiedlich lange Membransegmente entstehen. Die Zerstörung der Membran wäre damit weniger exakt vorbestimmbar als dies durch Vorsehen der vorgenannten Maßnahme der Fall ist. Ferner würde bei Anlage der Membran an der Wandung der Berstdruck steigen, was eine höhere Belastung des Gehäuses zur Folge hätte.

Vorzugsweise ist die Innenseite der Wandung so geformt, daß sich die Membransegmente nach dem Zerstören an die Wandung anlegen. Damit soll ein Abreißen von Segmentteilen durch den Gasstrom verhindert werden. Die Membransegmente legen sich an die Innenseite der Wandung an, und die durch die auftreffende Strömung auf sie aufgebrachte Kraft wird unmittelbar in die Wandung eingeleitet.

Falls unmittelbar nach dem Befestigungsabschnitt ein abgeschrägter, also kegelförmiger Abschnitt folgt, so ist dieser in einem Winkel von 30° bis 45° gegenüber einer Ebene geneigt, die durch die nicht druckbeaufschlagte Membran definiert ist.

Der abgeschrägte Abschnitt geht von einem abgerundeten Abschnitt in den konkaven Abschnitt über, so daß starke Absätze oder Knicke auf der Innenseite verhindert werden. Knicke oder Absätze müssen aber nicht zwingend zum Abreißen der Membransegmente führen und können durchaus vorgesehen sein.

Bevorzugt sind jedoch kontinuierliche Übergänge zwischen unterschiedlich geformten Abschnitten vorzusehen.

Eine weitere Maßnahme, um das Abreißen von Membransegmenten oder von Teilen von Membransegmenten zu verhindern, besteht darin, daß aufgrund der Länge des Ausströmkanals ein Herausragen von Membransegmenten aus dem Kanal ausgeschlossen ist. Der herausragende Abschnitt würde nämlich durch das Druckgas stark beansprucht werden. Dies würde zum Abreißen des Abschnitts der Membransegmente führen.

Ist der Ausströmkanal mit einem zylindrischen Abschnitt, der den kleinsten Strömungsquerschnitt definiert, versehen, so hat es sich als vorteilhaft herausgestellt, wenn die Membransegmente nicht einmal in den Abschnitt mit dem kleinsten Strömungsquerschnitt ragen können.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht, teilweise im Längsschnitt einer Ausführungsform des erfindungsgemäßen Gasgenerators,
- Figur 2 eine vergrößerte Längsschnittansicht des in Figur 1 mit X gekennzeichneten Bereichs, die eine Hälfte des in die Ausströmöffnung eingesetzten Membranhalters zeigt,
- Figur 3 eine vergrößerte Längsschnittansicht der linken Hälfte eines geringfügig anderen Membranhalters, und
- Figur 4 eine vergrößerte Längsschnittansicht des Membranhalters nach Figur 3 und der daran befestigten Membran im Befestigungsbereich der Membran.

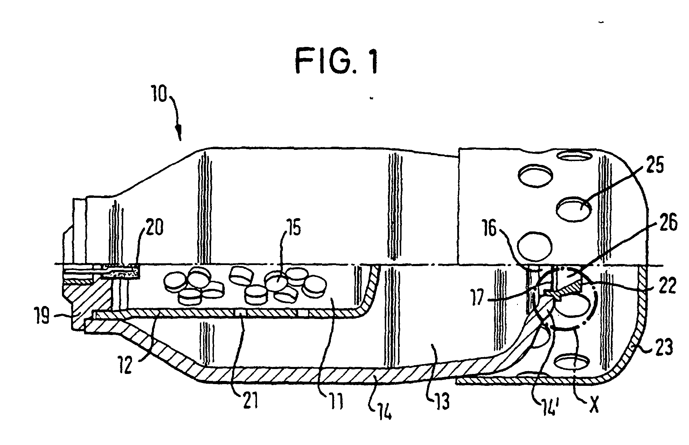

In Figur 1 ist ein Gasgenerator 10 gezeigt. Dieser besteht im wesentlichen aus einer Brennkammer 11 in einem zylinderförmigen Brennkammergehäuse 12, das von einer Druckkammer 13 mit einem Gehäuse 14 umgeben ist. In der Brennkammer 11 ist ein in Tablettenform vorliegender Treibstoff 15 untergebracht, wogegen sich in der Druckkammer 13 ein unter einem Druck stehendes Gas befindet. Das Gehäuse 14 hat einen rohrförmigen Abschnitt sowie eine sich daran anschließende Stirnwand 14'. Die Stirnwand 14' weist eine Ausströmöffnung 16 auf, über die im aktivierten Zustand Gas in einen Gasgenerator strömt. In die Ausströmöffnung 16 ist ein stopfenartiger Verschlußkörper eingesetzt, der diese verschließt und einen hohlen, als Membranhalter 22 bezeichneten Teil sowie eine Berstmembran 17 umfaßt, die an dem Membranhalter 22 im Bereich seines, dem Gasgeneratorinneren nahen Endes dauerhaft befestigt ist. Der Membranhalter 22 und die Membran bilden eine Einheit. Unmittelbar nach der Berstmembran 17 verjüngt sich der Membranhalter 22 und bildet in diesem Bereich eine Düse, die bei Aktivieren des Gasgenerators das Ausströmverhalten des Gases und den Druckverlauf im Gassack mitbestimmt.

Eine dem Gassack abgewandte weitere Öffnung im Gehäuse 14 ist mit einem Verschlußstück 19, in das eine Zündeinheit 20 integriert ist, gasdicht verschlossen.

Wenn die Zündeinheit 20 elektrisch aktiviert wird, entzündet diese den Treibstoff 15. Das durch den Abbrand des Treibstoffs 15 erzeugte heiße Treibgas strömt in die Brennkammer 11 durch im Brennkammergehäuse 12 vorgesehene Öffnungen 21 in die Druckkammer 13. Dadurch wird das Druckgas erhitzt und der sich im Druckgasbehälter 13 herrschende Druck gegenüber dem Druck im nicht aktivierten Zustand deutlich erhöht. Die Berstmembran 17 als schwächstes Bauteil wird damit so stark beansprucht, daß sie weiter plastisch verformt wird und schließlich birst.

Nach dem Bersten strömt das Druckgas über die Ausströmöffnung 16 in ein aufgesetztes Diffusorrohr 23, wo es expandiert und in den Gassack über Ausströmöffnungen 25 gelangt.

Die Ausströmöffnung 16 wird, da der Membranhalter 22 in sie eingesetzt ist, nur teilweise durch die Öffnung in der Stirnwand des Gehäuses 14 definiert. Der größte Abschnitt der Ausströmöffnung, die einen Ausströmkanal 26 definiert, wird durch den Membranhalter 22 gebildet, durch den hindurch das Gas strömt.

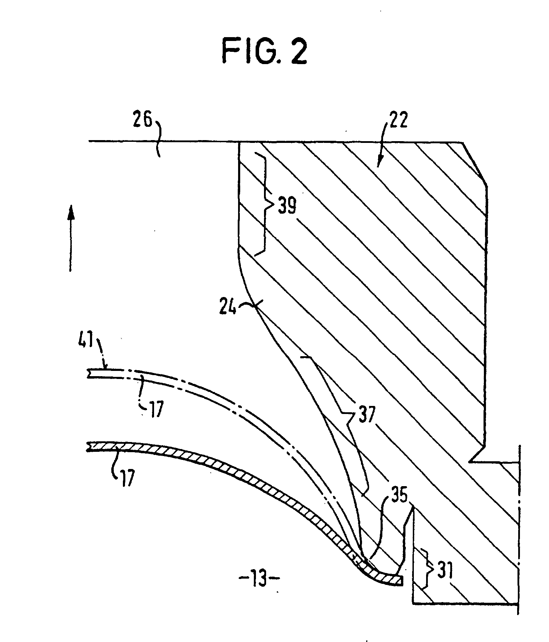

In Figur 2 ist der Membranhalter 22 mit daran angeschweißter Berstmembran 17 dargestellt. Die Berstmembran 17 ist in zwei Zuständen dargestellt. In einem nicht aktivierten, ersten Zustand des Gasgenerators ist sie bereits kalottenförmig nach außen gedehnt. Im zweiten Zustand ist sie noch weiter nach außen gedehnt. Dieser Zustand wird kurz nach Aktivieren des Gasgenerators erreicht. Die Berstmembran ist dabei kurz vor ihrem Bersten.

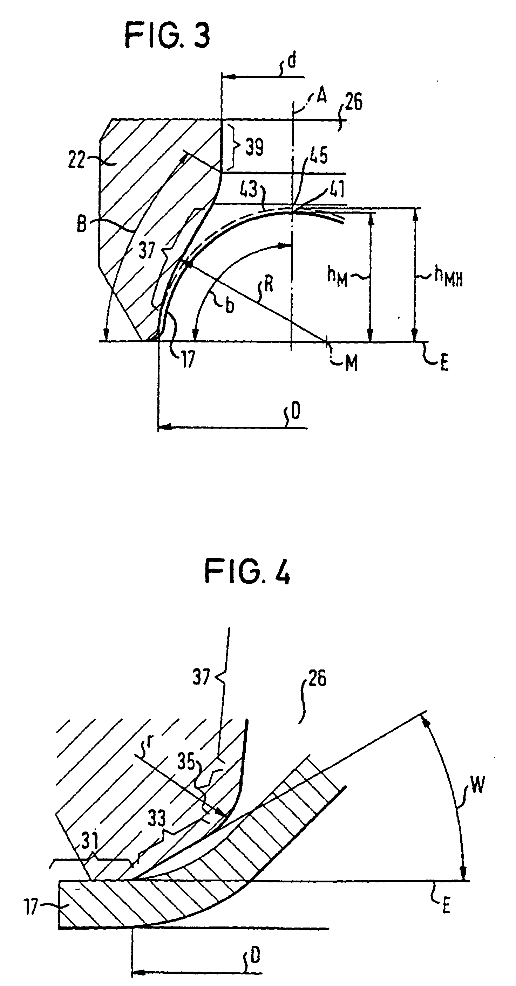

Der Membranhalter 22 hat verschiedene Abschnitte. In einem Befestigungsbereich 31, am Fuße des Membranhalters 22 ist die Berstmembran 17 am Membranhalter 22 angeschweißt. Der Befestigungsbereich ist in Figur 4 bei einem geringfügig anderen Membranhalter 22 nochmal exakter dargestellt. Auf der Innenseite der Wandung 24 des Membranhalters 22 schließt sich an den Befestigungsbereich 31 ein nach innen und in Strömungsrichtung um den Winkel W schräg verlaufender Abschnitt an, der im folgenden abgeschrägter Abschnitt 33 genannt wird. An den abgeschrägten Abschnitt 33 schließt sich eine Rundung mit Radius r auf den Innenseite der Wandung 24 an. Dieser Abschnitt wird als abgerundeter Abschnitt 35 bezeichnet. An den abgerundeten Abschnitt 35 schließt sich wiederum ein konkaver, domförmiger Abschnitt 37 an, der mit einer Rundung in einen zylindrischen Abschnitt 39 übergeht, welcher den Bereich des engsten Querschnitts der Ausströmöffnung 16 bildet. Die einzelnen Abschnitte gehen kontinuierlich ineinander über, ohne daß Absätze oder Kanten vorhanden sind, die zum Abreißen der beim Bersten der Membran 17 entstehenden Membransegmente (nicht gezeigt) führen könnten.

Anstatt des abgeschrägten Abschnitts 33 könnte in diesem Bereich auch eine Rundung vorgesehen sein. Wichtig bei der Ausgestaltung der Innenseite der Wandung 24 ist, daß die Berstmembran 17 in ihrem Zustand kurz vor dem Bersten nicht an der Innenseite anliegt. Damit ist gewährleistet, daß sie in ihrem am weitesten nach außen geformten Scheitelbereich 41 am höchsten beansprucht ist und das Reißen der Berstmembran vom Scheitelbereich 41 ausgeht. Die entstehenden Membransegmente haben in etwa die gleiche Länge. Die Länge des Ausströmkanals im Bereich der Abschnitte 33, 35, 37 ist so lang, daß die Segmente, die sich nach dem Öffnen an die Wandung 24 anlegen, nicht in den Bereich 39 des engsten Querschnitts ragen. Damit wird vermieden, daß die Spitzen der Segmente durch das ausströmende Gas in den Gassack mitgerissen werden und die Gassackwandung zerstören.

Der Membranhalter 22 hat mehrere Vorteile. Zum einen ist er als stopfenartiger Verschlußkörper ausgeführt, der in die Ausströmöffnung gesteckt ist und, nach dem Öffnen, die Ausströmöffnung sowie deren Strömungsquerschnitt zum Teil mit definiert. Damit kann die Ausströmcharakteristik des Gasgenerators durch Veränderung der Strömungsquerschnitte, insbesondere der Düsenform, an die Erfordernisse schnell und kostengünstig angepaßt werden, ohne daß eine Neufertigung des Gehäuses 14 notwendig ist. Zum anderen ist der Membranhalter 22 im Befestigungsbereich 31 so ausgebildet, daß keine Kerbwirkung auf die sich verformende Berstmembran 22 ausgeübt wird, wenn diese birst. Die Berstmembran 17 legt sich vielmehr, wie bereits erläutert, an die Innenseite der Wandung an. Der abgeschrägte Abschnitt 33 ist in einem Winkel W zwischen 30° und 45° gegenüber einer Ebene E abgeschrägt, die durch die Oberseite der Berstmembran 17 in nicht druckbeaufschlagtem Zustand der Membran definiert ist.

Die Berstmembran kann zwar Schwächungsbereiche aufweisen, die Sollbruchstellen bilden. Aufgrund der Ausgestaltung der Innenwandung ist dies aber nicht notwendig. Auch bei nicht mit Schwächungsbereichen versehener Berstmembran 17 ergibt sich ein vorbestimmbares, kontrolliertes Aufreißverhalten, und es werden keine Teile der Berstmembran 17 mit in den Gassack gerissen. Somit ist der Gasgenerator ohne Filter nach der Ausströmöffnung 16 ausgebildet, was die Kosten und auch das Gewicht des Gasgenerators reduziert.

Anhand von Figur 3 wird eine Ausführungsform des Membranhalters 22, die sich als sehr vorteilhaft erwiesen hat, näher erläutert. Die Innenseite der Wandung 24 des Membranhalters 22 weist die zuvor schon beschriebenen Bereiche und Abschnitte auf, nämlich den Befestigungsbereich 31, den abgeschrägten Abschnitt 33, den abgerundeten Abschnitt 35, den domförmigen Abschnitt 37 und den zylindrischen Abschnitt 39. In Figur 3 ist insbesondere der domförmige Abschnitt 37 mit Bemaßungspfeilen versehen dargestellt. Der domförmige Abschnitt 37 ist unter anderem durch einen Radius R definiert, dessen Mittelpunkt M in der Ebene E liegt. Der Mittelpunkt liegt jedoch nicht auf der Mittelachse A der Ausströmöffnung, sondern von dieser in Richtung weg von dem gezeigten linken Teil der Wandung 24. Legt man gedanklich in den domförmigen Abschnitt 37 eine Kugel 43, die mit unterbrochenen Linien gezeigt ist, und wählt man diese Kugel 43 so groß wie möglich, dann ergibt sich ein oberer Scheitelpunkt 45, dessen Abstand von der Ebene E mit hMH angegeben ist. Diese Höhe hMH muß auf jeden Fall größer als die Höhe hM sein, die den Abstand des Scheitels 41 der maximal ausgedehnten Membran 17 zur Ebene E definiert. Damit wird ausgeschlossen, daß sich die Berstmembran an die Innenseite der Wandung 24 anlegen kann. Ferner ist mit D der sogenannte effektive Durchmesser der Berstmembran 17 angegeben, wobei dieser den Bereich begrenzt, in dem sich die Berstmembran nach außen wölbt. Die Höhe hMH entspricht in etwa der Hälfte des effektiven Durchmessers D der Berstmembran 17. Die Länge der Membransegmente, gemessen ab dem Befestigungsbereich 31 entspricht im wesentlichen der Bogenlänge b. Die Bogenlänge b ist kleiner als die Länge des Ausströmkanals 26 vom Befestigungsbereich 31 bis zu Beginn des zylindrischen Abschnitts 39. Diese Länge wird auf der Innenseite der Wandung 24 und in Strömungsrichtung gemessen und ist mit B bezeichnet. Durch diese geometrische Ausbildung wird verhindert, daß die Membransegmente in den Bereich des zylindrischen Abschnitts 39 ragen, da ansonsten eine große Wahrscheinlichkeit besteht, daß Teile der Membransegmente durch die Strömung abgerissen werden.

Alternativ kann die Berstmembran 17 auch im nicht druckbelasteten Zustand im Befestigungsbereich 31 kegelförmig ausgebildet sein, wobei dann auch die Wandung 24 entsprechend ausgebildet sein muß. Die Form der Wandung 24 muß so ausgelegt sein, daß sich durch diese Ausbildung die Berstmembran 17 nicht an die Innenseite der Wandung 24 im Bereich der Düse anlegt.

## Patentansprüche

1. Gasgenerator mit einem Gehäuse (14), einer Ausströmöffnung (16) im Gehäuse (14), über die Gas austreten kann, und einer Berstmembran (17), die die Ausströmöffnung (16) in nicht-aktiviertem Zustand des Gasgenerators verschließt und die bei Aktivierung unmittelbar durch den vom Gas erzeugten hohen Innendruck zerstört wird, wobei die Berstmembran (17) einen Außenrand hat, an dem sie dauerhaft an einer Wandung (24) befestigt ist, die wenigstens einen axialen Abschnitt der Ausströmöffnung (16) definiert, dadurch gekennzeichnet, daß die Wandung (24) stromabwärts unmittelbar nach dem Befestigungsbereich (31) der Berstmembran abgerundet ist oder nach innen und in Ausströmrichtung schräg verläuft und daß die Ausströmöffnung (16) durch einen Ausströmkanal (26) definiert ist und die Wandung (24) Teil einer sich an die Berstmembran (17) in Strömungsrichtung anschließenden Düse ist, die einen konkaven Abschnitt hat.

2. Gasgenerator nach Anspruch 1, dadurch gekennzeichnet, daß die Innenseite der Wandung (24) so geformt ist, daß sich die Berstmembran (17) kurz vor Erreichen des zu ihrem Zerstören führenden Innendrucks im Gehäuse (14) nicht an die Wandung (24) anlegt.

3. Gasgenerator nach einem der vorstehenden Ansprüche, dadurch gekennzeichnet, daß sich an den Befestigungsbereich (31) ein nach innen und in Strömungsrichtung schräg verlaufender Abschnitt (33) auf der Innenseite der Wandung (24) anschließt und dieser Abschnitt (33) über einen abgerundeten Abschnitt (35) in einen konkaven Abschnitt (37) übergeht.

4. Gasgenerator nach einem der vorstehenden Ansprüche, dadurch gekennzeichnet, daß die Innenseite der Wandung (24) unmittelbar nach dem Befestigungsbereich (31) in einem Winkel von 30° bis 45° gegenüber einer durch die nicht druckbelastete Berstmembran (17) definierten Ebene (E) nach innen und in Strömungsrichtung schräg verläuft.

5. Gasgenerator nach einem der vorhergehenden Ansprüche, dadurch gekennzeichnet, daß sich an den konkaven Abschnitt (37) ein im wesentlichen zylindrischer Abschnitt (39) anschließt.

6. Gasgenerator nach einem der vorhergehenden Ansprüche, dadurch gekennzeichnet, daß der konkave Abschnitt (39) domförmig ist.

7. Gasgenerator nach Anspruch 6, dadurch gekennzeichnet, daß der Radius (r) der sich kalottenförmig bei hohem Innendruck im Gehäuse (14) verformenden Berstmembran (17) kurz vor ihrer Zerstörung kleiner als der Radius (R) ist, der den domförmigen Abschnitt (37) mit definiert.

8. Gasgenerator nach Anspruch 7, dadurch gekennzeichnet, daß der Mittelpunkt des Radius (R) des domförmigen Abschnitts (37) auf einer durch die nicht druckbelastete Berstmembran (17) definierten Ebene (E) liegt.

9. Gasgenerator nach einem der vorstehenden Ansprüche, dadurch gekennzeichnet, daß bei Zerstörung der Berstmembran (17) Membransegmente erzeugt werden, die sich an die Innenseite der Wandung (24) anlegen, wobei die Form der Innenseite auf die Festigkeit der Berstmembran (17) so abgestimmt ist, daß die Membransegmente nicht mit dem Gasstrom weggerissen werden.

10. Gasgenerator nach Anspruch 9, dadurch gekennzeichnet, daß durch die Wandung (24) ein Ausströmkanal (26) gebildet ist, dessen Länge, auf der Innenseite der Wandung (24) in Strömungsrichtung gemessen, länger als die der sich an die Wandung (24) anlegenden Membransegmente ist.

11. Gasgenerator nach Anspruch 9, dadurch gekennzeichnet, daß durch die Wandung (24) ein Ausströmkanal (26) gebildet ist, der einen sich an den Befestigungsbereich (31) der Berstmembran (17) angrenzenden, konkaven und einen sich an diesen anschließenden, im wesentlichen zylindrischen Abschnitt (37 bzw. 39) hat, und daß die Membransegmente aufgrund der Länge des Ausströmkanals (26) bis zum zylindrischen Abschnitt (39) nicht in den zylindrischen Abschnitt (39) ragen.

12. Gasgenerator nach einem der vorstehenden Ansprüche, dadurch gekennzeichnet, daß die Berstmembran (17) Schwächungsbereiche aufweist, die Sollbruchstellen bilden.

13. Gasgenerator nach einem der vorstehenden Ansprüche, dadurch gekennzeichnet, daß die Berstmembran (17) an einem die Wandung (24) aufweisenden Membranhalter (22) befestigt ist, der als slopfenartiger Verschlußkörper in die Ausströmöffnung (16) eingesetzt ist und diese verschließt und bei Zerstörung der Berstmembran (17) diese mit definiert.

14. Gasgenerator nach Anspruch 13, dadurch gekennzeichnet, daß der Membranhalter (22) unmittelbar stromabwärts der Berstmembran (17) die Düse oder Drossel bildet.

15. Gasgenerator nach einem der vorstehenden Ansprüche, dadurch gekennzeichnet, daß der Gasgenerator gespeichertes Druckgas beinhaltet.

16. Gasgenerator nach einem der vorstehenden Ansprüche, dadurch gekennzeichnet, daß die Innenseite der Wandung (24) absatzlos ausgeformt ist und unterschiedlich geformte Abschnitte (33, 35, 37, 39) vorgesehen sind, die kontinuierlich ineinander übergehen.

## Claims

1. A gas generator comprising a housing (14), an outflow opening (16) in the housing (14), via which opening gas can emerge, and a bursting membrane (17) which closes the outflow opening (16) in the non-activated state of the gas generator and which upon activation is destroyed immediately by the high internal pressure generated by the gas, the bursting membrane (17) having an outer edge at which it is permanently fastened on a wall (24), the latter defining at least one axial section of the outflow opening (16), characterized in that the wall (24) is rounded downstream of and immediately after the fastening region (31) of the bursting membrane or extends inwards and obliquely in the outflow direction and that the outflow opening (16) is defined by an outflow channel (26) and the wall (24) is part of a nozzle adjoining the bursting membrane (17) in the direction of flow and having a concave section.

2. The gas generator according to claim 1, characterized in that the inner face of the wall (24) is shaped in such a manner that the bursting membrane (17), shortly before reaching the internal pressure in the housing (14) leading to its destruction, does not come to lie against the wall (24).

3. The gas generator according to any of the preceding claims, characterized in that adjacent to the fastening region (31) there is provided a section (33) on the inner face of the wall (24) and extending inwardly and obliquely in the direction of flow, this section (33) continuing via a rounded section (35) into a concave section (37).

4. The gas generator according to any of the preceding claims, characterized in that the inner face of the wall (24) immediately after the fastening region (31) extends inwards at an angle of 30° to 45° with respect to a plane (E) defined by the bursting membrane (17) when not under pressure load, and obliquely in flow direction.

5. The gas generator according to any of the preceding claims, characterized in that a substantially cylindrical section (39) adjoins the concave section (37).

6. The gas generator according to any of the preceding claims, characterized in that the concave section (39) is dome-shaped.

7. The gas generator according to claim 6, characterized in that the radius (r) of the bursting membrane (17), the latter deforming in a calotte shape at a high internal pressure in the housing (14) shortly before its destruction, is smaller than the radius (R) which co-defines the dome-shaped section (37).

8. The gas generator according to claim 7, characterized in that the center point of the radius (R) of the dome-shaped section (37) lies on a plane (E) defined by the bursting membrane when not under pressure load.

9. The gas generator according to any of the preceding claims, characterized in that on destruction of the bursting membrane (17) membrane segments are produced which come to lie against the inner face of the wall (24), the shape of the inner face being coordinated with the strength of the bursting membrane (17) in such a manner that the membrane segments are not torn away with the gas stream.

10. The gas generator according to claim 9, characterized in that an outflow channel (26) is formed by the wall (24), the length of which, measured on the inner face of the wall (24) in the direction of flow, is longer than that of the membrane segments (24) coming to lie against the wall.

11. The gas generator according to claim 9, characterized in that an outflow channel (26) is formed by the wall (24), the channel having a concave section adjoining the fastening region (31) of the bursting membrane (17) and a substantially cylindrical section (37 and 39, respectively) adjoining thereto, and that the membrane segments, owing to the length of the outflow channel (26) up to the cylindrical section (39), do not protrude into the cylindrical section (39).

12. The gas generator according to any of the preceding claims, characterized in that the bursting membrane (17) has weakened portions which form predetermined breaking points.

13. The gas generator according to any of the preceding claims, characterized in that the bursting membrane (17) is fastened to a membrane support (22) comprising the wall (24), which membrane support is inserted as a plug-shaped closure body into the outflow opening (16) and closes the outflow opening and, on destruction of the bursting membrane (17), co-defines the outflow opening.

14. The gas generator according to claim 13, characterized in that the membrane support (22) forms the nozzle or throttle immediately downstream of the bursting membrane (17).

15. The gas generator according to any of the preceding claims, characterized in that the gas generator contains stored compressed gas.

16. The gas generator according to any of the preceding claims, characterized in that the inner face of the wall (24) is formed without a shoulder and differently shaped sections (33, 35, 37, 39) are provided, which pass into each other continuously.

## Revendications

1. Générateur de gaz comportant un boîtier (14), un orifice d'écoulement (16) dans le boîtier (14), par lequel le gaz peut sortir, et une membrane d'éclatement (17) qui referme l'orifice d'écoulement (16) à l'état non-activé du générateur de gaz et qui, lorsque celui-ci est activé, est détruite directement par la pression intérieure élevée engendrée par le gaz, la membrane d'éclatement (17) possédant un bord extérieur par lequel elle est fixée de manière durable sur une paroi (24) qui définit au moins une portion axiale de l'orifice d'écoulement (16), caractérisé en ce que la paroi est arrondie directement en aval de la zone de fixation (31) de la membrane d'éclatement ou s'étend vers l'intérieur et en biais en direction d'écoulement et en ce que l'orifice d'écoulement (16) est défini par un canal d'écoulement (26), et la paroi (24) fait partie d'une buse se raccordant à la membrane d'éclatement (17) en direction d'écoulement, ladite buse ayant une portion concave.

2. Générateur de gaz selon la revendication 1, caractérisé en ce que la face intérieure de la paroi (24) est formée de telle sorte que la membrane d'éclatement (17) n'est pas appliquée contre la paroi (24) juste avant que la pression intérieure entraînant sa destruction soit atteinte dans le boîtier (14).

3. Générateur de gaz selon l'une quelconque des revendications précédentes, caractérisé en ce que sur la face intérieure de la paroi (24), une portion (33), s'étendant vers l'intérieur et en biais en direction d'écoulement, se raccorde à la zone de fixation (31), et ladite portion (33) se transforme par l'intermédiaire d'une portion arrondie (35) en une portion concave (37).

4. Générateur de gaz selon l'une quelconque des revendications précédentes, caractérisé en ce que la face intérieure de la paroi (24) s'étend vers l'intérieur et en biais en direction d'écoulement, directement après la zone de fixation (31) sous un angle de 30° à 45° par rapport à un plan (E) défini par la membrane d'éclatement (17) qui n'est pas sollicitée par la pression.

5. Générateur de gaz selon l'une quelconque des revendications précédentes, caractérisé en ce que une portion (39) sensiblement cylindrique se raccorde à la portion concave (37).

6. Générateur de gaz selon l'une quelconque des revendications précédentes, caractérisé en ce que la portion concave (39) est en forme de dôme.

7. Générateur de gaz selon la revendication 6, caractérisé en ce que juste avant la destruction de la membrane d'éclatement (17), qui se déforme en forme de calotte lorsque la pression dans le boîtier (14) est élevée, le rayon (r) de ladite membrane est plus petit que le rayon (R) qui définit également la portion (37) en forme de dôme.

8. Générateur de gaz selon la revendication 7, caractérisé en ce que le centre du rayon (R) de la portion (37) en forme de dôme est situé sur un plan (E) défini par la membrane d'éclatement (17) qui n'est pas sollicitée par la pression.

9. Générateur de gaz selon l'une quelconque des revendications précédentes, caractérisé en ce que lors de la destruction de la membrane d'éclatement (17) sont engendrés des segments de membrane qui s'appliquent contre la face intérieure de la paroi (24), la forme de la face intérieure étant adaptée à la solidité de la membrane d'éclatement (17) de telle sorte que les segments de membrane ne sont pas arrachés par le flux de gaz.

10. Générateur de gaz selon la revendication 9, caractérisé en ce que par la paroi (24) est formé un canal d'écoulement (26) dont la longueur, mesurée sur la face intérieure de la paroi (24) en direction d'écoulement, est supérieure à la longueur des segments de membrane s'appliquant sur la paroi (24).

11. Générateur de gaz selon la revendication 9, caractérisé en ce que par la paroi (24) est formé un canal d'écoulement (26) qui possède une portion (37) concave adjacente à la zone de fixation (31) de la membrane d'éclatement (17) et une portion (39) sensiblement cylindrique se raccordant à ladite portion (37), et en ce que les segments de membrane, en raison de la longueur du canal d'écoulement (26) jusqu'à la portion cylindrique (39), ne font pas saillie dans la portion cylindrique (39).

12. Générateur de gaz selon l'une quelconque des revendications précédentes, caractérisé en ce que la membrane d'éclatement (17) présente des zones d'affaiblissement qui forment des points destinés à la rupture.

13. Générateur de gaz selon l'une quelconque des revendications précédentes, caractérisé en ce que la membrane d'éclatement (17) est fixée sur un support de membrane (22) présentant la paroi (24), lequel est mis en place dans l'orifice d'écoulement en tant que corps de fermeture en forme de bouchon, et ferme ledit orifice, définissant également la membrane d'éclatement (17) lors de sa destruction.

14. Générateur de gaz selon la revendication 13, caractérisé en ce que le support de membrane (22) forme la buse ou l'étranglement directement en aval de la membrane d'éclatement (17).

15. Générateur de gaz selon l'une quelconque des revendications précédentes, caractérisé en ce que le générateur de gaz contient du gaz sous pression stocké.

16. Générateur de gaz selon l'une quelconque des revendications précédentes, caractérisé en ce que la face intérieure de la paroi (24) est formée sans gradin et qu'il est prévu des portions (33, 35, 37, 39) de configuration différente, qui passent les unes dans les autres de manière continue.
